# EUROPEAN PATENT APPLICATION

(11) **EP 4 346 278 A1**
(43) Date of publication of application: **03.04.2024**
(21) Application number: 23197647.3
(22) Date of filing: 15.09.2023
(51) Int. Cl.: H04W 36/00, H04W 36/32

(54) **USING MACHING LEARNING TO AVOID PING-PONG HANDOVER**

(30) Priority: 27.09.2022 US 202217953442
(71) Applicant: Nokia Technologies Oy, 02610 Espoo (FI)
(72) Inventor: MASRI, Ahmad, Tampere (FI)
(74) Representative: Nokia EPO representatives

(57) **Abstract**

Example embodiments of the invention provide at least a method and apparatus to perform communicating by a network node with a user equipment of a communication network a ping-pong offset prediction request message; determining a ping-pong offset prediction wherein the ping-pong offset prediction is taking into account a change in at least one of a speed, trajectory, or received signal levels from a previous serving cell; based on the determining, sending to the network node a ping-pong offset prediction, and wherein based on the ping-pong offset prediction the handover back to the previous serving cell is one of executed or not executed.

## Description

### TECHNICAL FIELD:

The teachings in accordance with the exemplary embodiments of this invention relate generally to perform machine learning based unnecessary handover avoidance and, more specifically, relate to an machine learning based technique to dynamically predict and tune a Ping-Pong Offset (PPOffset) after a handover in order to avoid a ping-pong handover back from a current serving cell/beam to a previous serving cell/beam.

### BACKGROUND:

This section is intended to provide a background or context to the invention that is recited in the claims. The description herein may include concepts that could be pursued, but are not necessarily ones that have been previously conceived or pursued. Therefore, unless otherwise indicated herein, what is described in this section is not prior art to the description and claims in this application and is not admitted to be prior art by inclusion in this section.

Certain abbreviations that may be found in the description and/or in the Figures are herewith defined as follows:
- CE: Control element
- CHO: Conditional Handover
- CIO: Cell Individual offset
- gNB: 5G Base Station
- HO: Handover
- HOF: Handover Failure
- LSTM: Long Short Term Memory
- LLM: Low Level Mobility
- MAC: Medium access Control
- MAC CE: Medium access Control Control Element
- MIMO: Multiple Input Multiple Output
- ML: Machine Learning
- MRO: Mobility Robustness Optimization
- PPOffset: Ping-pong Offset
- RAN: Radio Access Network
- RSRP: Reference Signal Received Power
- RSRQ: Reference Signal Received Quality
- SINR: Signal to Interference and Noise Ratio
- RLF: Radio Link Failure
- TTT: Time to Trigger
- VNO: Visitor Location Register

Handover (HO) related Key Performance Indicators (KPIs) for mobility robustness optimization (MRO) in cellular mobile communications. MRO algorithms are well-known methods for optimizing mobility parameters to improve mobility performance, e.g., minimize mobility-related failures and unnecessary handovers. The common approach in MRO algorithms is to optimize the Cell Individual Offset (CIO) and Time-to-Trigger (TTT), i.e., the key parameters in controlling the HO procedure initiation. The network can control the handover procedure between any cell pair in the network by defining different CIO and TTT values.

Example embodiments of the invention work to improve upon at least these features for determination of handover requirements.

### SUMMARY:

In an example aspect of the invention, there is an apparatus, such as a user equipment side apparatus, comprising: at least one processor; and at least one non-transitory memory storing instructions that, when executed by the at least one processor, cause the apparatus at least to; receive from a network node of the communication network a ping-pong offset prediction request message; determine a ping-pong offset prediction, wherein the ping-pong offset prediction is taking into account a change in at least one of a speed, trajectory, or received signal levels from a previous serving cell; and based on the determining, send towards the network node the ping-pong offset prediction, wherein based on the ping-pong offset prediction a handover back to the previous serving cell is one of executed or not executed.

In another example aspect of the invention, there is a method comprising: receiving from a network node of the communication network a ping-pong offset prediction request message; determining a ping-pong offset prediction wherein the ping-pong offset prediction is taking into account a change in at least one of a speed, trajectory, or received signal levels from a previous serving cell; and based on the determining, sending towards the network node the ping-pong offset prediction, wherein based on the ping-pong offset prediction a handover back to the previous serving cell is one of executed or not executed.

A further example embodiment is an apparatus and a method comprising the apparatus and the method of the previous paragraphs, wherein the ping-pong offset prediction is taking into account at least the received signal levels from the previous serving cell as input to a machine learning pre-trained model to perform prediction for an optimal ping-pong offset, wherein the ping-pong offset prediction determination is repeated periodically, wherein the ping-pong offset prediction determination at the user equipment is repeated periodically upon notification from the communication network, wherein the optimal ping-pong offset is to be used as part of handover measurement reporting for triggering at least one of an A3 event based or layer1/layer2 mobility handover or a conditional handover, wherein the ping-pong offset prediction is sent to the network node as part of layer 1 measurement reporting to the communication network, wherein the ping-pong offset prediction is identifying a value for one of preventing or delaying the apparatus from executing a handover to the previous serving cell, wherein the ping-pong offset prediction as part of a handover decision to trigger executing or not executing the handover back toward the previous serving cell, wherein the handover decision is triggered upon evaluating whether a previous serving cell power exceeds a current serving cell power plus a ping-pong offset value or not, and/or wherein the receiving is based on determining that a handover of the apparatus from a serving cell back to the previous serving cell is to be executed.

A non-transitory computer-readable medium storing program code, the program code executed by at least one processor to perform at least the method as described in the paragraphs above.

In another example aspect of the invention, there is an apparatus comprising: means for receiving from a network node of the communication network a ping-pong offset prediction request message; determining a ping-pong offset prediction, wherein the ping-pong offset prediction is taking into account a change in at least one of a speed, trajectory, or received signal levels from a previous serving cell; and means, based on the determining, for sending towards the network node a ping-pong offset prediction, wherein based on the ping-pong offset prediction a handover back to the previous serving cell is one of executed or not executed.

In the example aspect of the invention according to the paragraph above, wherein at least the means for determining, receiving, sending, and executing or not executing comprises a non-transitory computer readable medium encoded with a computer program executable by at least one processor.

In an example aspect of the invention, there is an apparatus, such as a network side apparatus, comprising: at least one processor; and at least one non-transitory memory storing instructions that, when executed by the at least one processor, cause the apparatus at least: send towards the user equipment a ping-pong offset prediction request message to enable ping-pong offset prediction at the user equipment; based on the sending, receive from the user equipment a ping-pong offset prediction, wherein the ping-pong offset prediction is taking into account a change in at least one of a speed, trajectory, or received signal levels from a previous serving cell; and based on the ping-pong offset prediction, determine to one of execute or not execute a handover back to the previous serving cell.

In another example aspect of the invention, there is a method comprising: sending towards the user equipment a ping-pong offset prediction request message to enable ping-pong offset prediction at the user equipment; based on the sending, receiving from the user equipment a ping-pong offset prediction, wherein the ping-pong offset prediction is taking into account a change in at least one of a speed, trajectory, or received signal levels from a previous serving cell; and based on the received ping-pong offset prediction, determining to one of execute or not execute a handover back to the previous serving cell.

A further example embodiment is an apparatus and a method comprising the apparatus and the method of the previous paragraphs, wherein the ping-pong offset prediction request message is to enable a machine learning based ping-pong offset prediction at the user equipment, wherein the ping-pong offset prediction is received by the network node as part of layer 1 measurement reporting, wherein the at least one non-transitory memory storing instructions that when executed by the at least one processor cause the apparatus at least to: use the ping-pong offset prediction to evaluate the handover; and prepare a medium access control control element (MAC CE) command for executing the handover, wherein the apparatus uses the ping-pong offset prediction as part of a handover decision to trigger executing or not executing the handover back toward the previous serving cell, wherein the ping-pong offset prediction is utilized as part of a handover decision rule to evaluate whether a previous serving cell power exceeds a current serving cell power plus a ping-pong offset value or not, wherein the user equipment uses the ping-pong offset prediction as part of a handover decision to trigger executing or not executing the handover back toward the serving cell, and/or wherein the sending is based on determining a handover of the user equipment from a serving cell back to the previous serving cell is to be executed.

A non-transitory computer-readable medium storing program code, the program code executed by at least one processor to perform at least the method as described in the paragraphs above.

In another example aspect of the invention, there is an apparatus comprising: means for sending towards the user equipment a ping-pong offset prediction request message to enable ping-pong offset prediction at the user equipment; means, based on the sending, for receiving from the user equipment a ping-pong offset prediction, wherein the ping-pong offset prediction is taking into account a change in at least one of a speed, trajectory, or received signal levels from a previous serving cell; and means, based on the ping-pong offset prediction, for determining to one of execute or not execute a handover back to the previous serving cell.

In the example aspect of the invention according to the paragraph above, wherein at least the means for determining, receiving, sending, and executing or not executing comprises a non-transitory computer readable medium encoded with a computer program executable by at least one processor.

### BRIEF DESCRIPTION OF THE DRAWINGS:

The above and other aspects, features, and benefits of various embodiments of the present disclosure will become more fully apparent from the following detailed description with reference to the accompanying drawings, in which like reference signs are used to designate like or equivalent elements. The drawings are illustrated for facilitating better understanding of the embodiments of the disclosure and are not necessarily drawn to scale, in which:
FIG. 1 shows a baseline handover procedure;
FIG. 2 shows an A3 Event handover example;
FIG. 3 shows a conditional handover in New Radio;
FIG. 4 shows a handover in L1/L2 based mobility;
FIG. 5 shows a functional framework for RAN intelligence;
FIG. 6 shows a mobility optimization use case;
FIG. 7 shows a ping-pong avoidance in A3 Event based Mobility signalling flow chart use case;
FIG. 8 shows a ping-pong avoidance in L1/L2 Mobility signalling flow chart use case;
FIG. 9 shows an example machine learning model structure;
FIG. 10 shows a high level block diagram of various devices used in carrying out various aspects of the invention; and
FIG. 11A and FIG. 11B each show a method in accordance with example embodiments of the invention which may be performed by an apparatus.

### DETAILED DESCRIPTION:

In this invention, there is proposed at least methods and apparatus to perform machine learning based unnecessary handover Avoidance.

Different CIO and TTT configurations are needed for mobile terminals with different speeds. The faster the terminals are, the sooner the handover procedure must be started. This goal is achieved by either increasing the CIO (i.e., the offset between the measured signal power of the serving cell and the target cell) or decreasing the TTT (i.e., the interval, during which the trigger requirement is fulfilled). In contrast, in the cell boundaries dominated by slow users, the handover procedures are started relatively later by choosing the lower values for the CIO or higher TTT.

It is worth noting that changing the CIOs rather than TTTs is the preferred approach in practice. Whereas the speed of the mobile terminals plays an obvious role, it is not the only criteria. Slow mobile terminals may also be at risk (requiring earlier handovers) when moving through areas with significant propagation changes (e.g., very steep shadowing slope). Fast mobile terminals may not be at risk when moving through areas with little propagation changes (e.g., flat shadowing slopes).

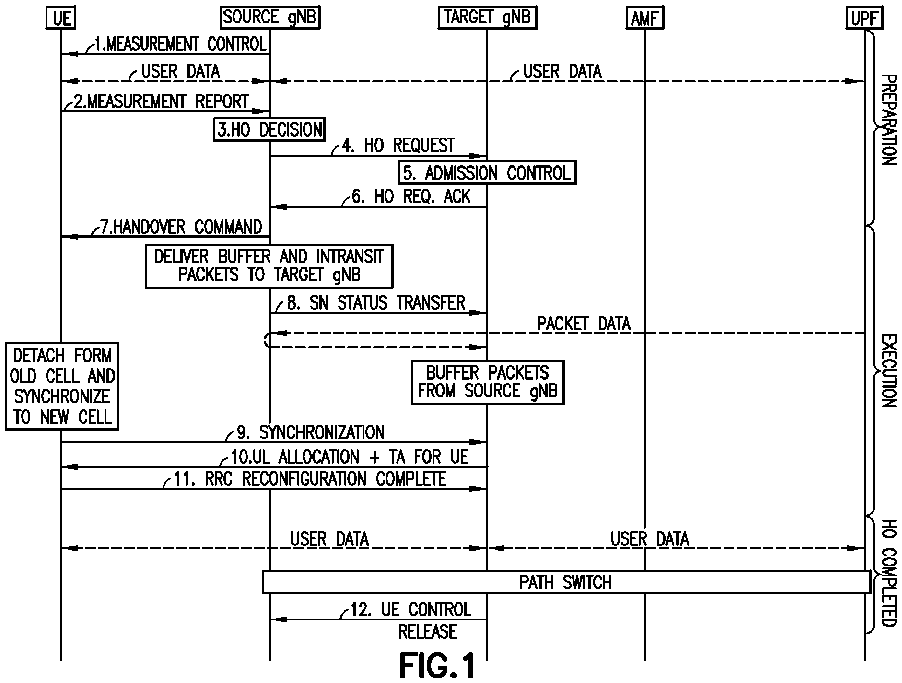

Hence, even if velocity could be instantaneously estimated with enough accuracy (which is extremely challenging or even impossible), velocity-based methods would not always react correctly. Nevertheless, we will use the intuitive example of speed in the following for better illustration, i.e., "slow" refers to uncritical terminals which are not under failure risk but may still suffer Ping-Pong's), and "fast" refers to the as critical terminal which is at failure risk. FIG. 1 shows the baseline HO procedure in 5G. A successful HO requires success in all of the sequences. Conditional HO (CHO) has enabled decoupling the preparation phase from the execution phase. Steps 1 to 7 are identical to the legacy handover.

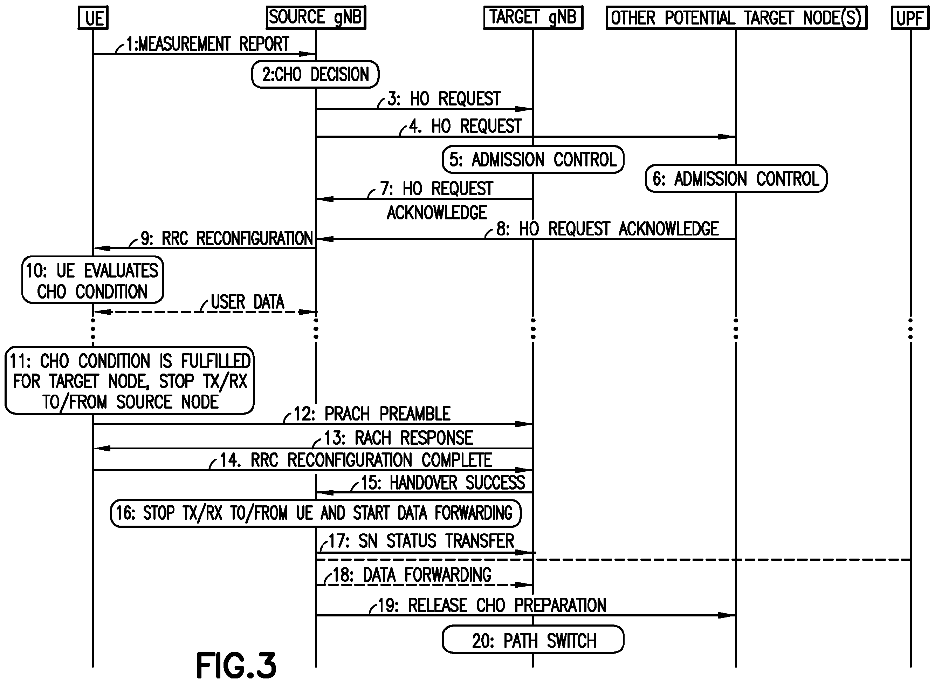

FIG. 3 shows a conditional handover in New Radio.

A configured event triggers the UE to send a measurement report. Based on this report, the source node can prepare one or more target cells in the same target node, or multiple target nodes for the (conditional) handover (CHO Request + CHO Request Acknowledge) and then sends an RRC (Radio Resource Control) Reconfiguration. The mobility-related failures can be classified into four categories.

Too Early (TE) handover failures: This type of failure happens when the UE handovers to target cell before the link quality of the target cell is not good enough. In one example, when the A3 entry condition has been met, the TTT timer expires, and UE performs the handover procedure. However, shortly after the handover, it experiences Radio Link Failure (RLF). In these cases, it is apparent that the handover procedure should have started relatively later. Hence, the MRO reduces the related CIO value. Another example of a too early initiated handover is the expiry of the timer T304, also called "Handover Failure". This happens, when the target cell is not good enough, such that even the Random Access Channel (RACH) is not successful.

Too Late (TL) handover failures: in this type of failures, either UE did not even send out a measurement report (e.g., since the TTT timer did not expire before the RLF), or the measurement report or the handover command got lost due to degrading channel conditions, and thus the UE has not started the handover procedure. The solution for eliminating these failures is to start the handover relatively sooner, hence, the MRO increases the related CIO.

Ping-pong (PP) handovers failures refer to cases that the UE hands over to the target cell but shortly after it has to handover back to the source cell. This case is usually considered as another form of TE handover.

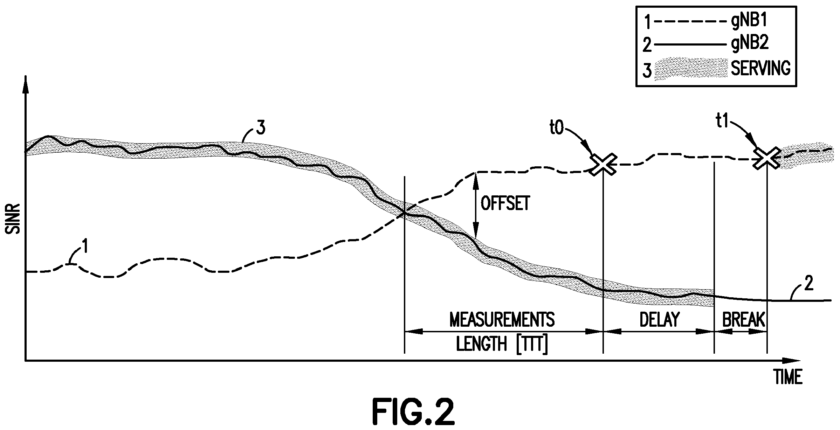

Wrong Cell (WC) Handover failures: radio link failure occurs in the target cell shortly after a handover has been completed, and the UE attempts to re-establish its radio link in a cell which is neither the source cell nor the target cell. Alternatively, the timer T304 expires during the handover procedure (i.e., "Handover failure"), and the UE attempts to re-establish its radio link in a cell which is neither the source cell nor the target cell. A3 Even based Handover Current handover mechanisms are reactive as it is shown in FIG. 2.

Execution of HO is delayed due to TTT (e.g. ~200-300ms), offset (e.g. 1-3dB), and signaling delays. On the other hand, shorter TTT and smaller offset may lead to too early triggering and/or triggering HO to suboptimal target. Mobility Robustness Optimization, tries to adjust HO parameters based on too early/too late handovers, but problem may be more complicated

In FIG. 1, conditional handover procedure (CHO) standardized in 3GPP at the time of this application is described.

Current AI/ML Framework in 3GPP The machine learning provides extremely useful and valuable tools to handle the increasing complexity and improve the performance of wireless access networks (5G and beyond). Several studies and proof of concepts have already proven the efficiency of Machine learning in different use cases such as mobility optimization, Scheduling Beamforming in Massive MIMO Networks, Indoor Positioning and configuration of Uplink and Downlink Channels.

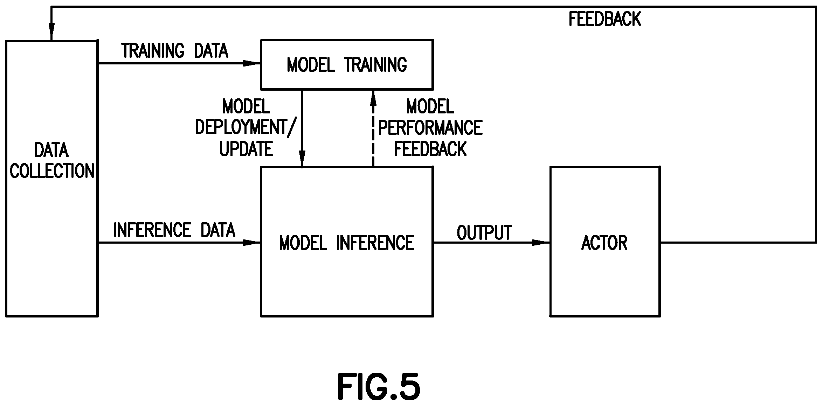

To enable the introduction of Machine Learning into the RAN, the standard is defining the functional framework including the different interfaces, entities and functions to provide all the necessary means for integrating AI/ML methods. A functional framework for RAN intelligence study includes the AI functionality and the inputs and outputs needed by an ML algorithm. Specifically, the study aims to identify the data needed by an AI function in the input and the data that is produced in the output, as well as the standardization impacts at a node in the existing architecture or in the network interfaces to transfer this input/output data through them. Such discussions will continue during related specification for standards. FIG. 5 illustrate the functional framework for RAN intelligence followed by the related common terminologies.

As shown in FIG. 5, data Collection is a function that provides input data to Model training and Model inference functions. AI/ML algorithm specific data preparation (e.g., data pre-processing and cleaning, formatting, and transformation) is not carried out in the Data Collection function.

Examples of input data may include measurements from UEs or different network entities, feedback from Actor, output from an AI/ML model:
o Training Data: Data needed as input for the AI/ML Model Training function;
o Inference Data: Data needed as input for the AI/ML Model Inference function.

Model Training is a function that performs the AI/ML model training, validation, and testing which may generate model performance metrics as part of the model testing procedure. The Model Training function is also responsible for data preparation (e.g., data pre-processing and cleaning, formatting, and transformation) based on Training Data delivered by a Data Collection function, if required:
o Model Deployment/Update: Used to initially deploy a trained, validated, and tested AI/ML model to the Model Inference function or to deliver an updated model to the Model Inference function;
o Note: Details of the Model Deployment/Update process as well as the use case specific AI/ML models transferred via this process are out of RAN3 Rel-17 study scope. The feasibility to single-vendor or multi-vendor environment has not been studied in RAN3 Rel-17 study.

Model Inference is a function that provides AI/ML model inference output (e.g., predictions or decisions). Model Inference function may provide Model Performance Feedback to Model Training function when applicable. The Model Inference function is also responsible for data preparation (e.g., data pre-processing and cleaning, formatting, and transformation) based on Inference Data delivered by a Data Collection function, if required:
o Output: The inference output of the AI/ML model produced by a Model Inference function;
o Note: Details of inference output are use case specific;
o Model Performance Feedback: It may be used for monitoring the performance of the AI/MI, model, when available;
o Note: Details of the Model Performance Feedback process are out of RAN3 scope.

Actor is a function that receives the output from the Model Inference function and triggers or performs corresponding actions. The Actor may trigger actions directed to other entities or to itself.

Feedback: Information that may be needed to derive training data, inference data or to monitor the performance of the AI/ML Model and its impact to the network through updating of KPIs and performance counters.

NOTE: The functional framework discussed above is only in the context of the network scope i.e., RAN3 interfaces. Although some aspects of this functional framework serve as a reference for the currently ongoing RAN1 study item (i.e., AI/ML in the air interface), the framework for the gNB and UE collaboration requires fresh discussions.

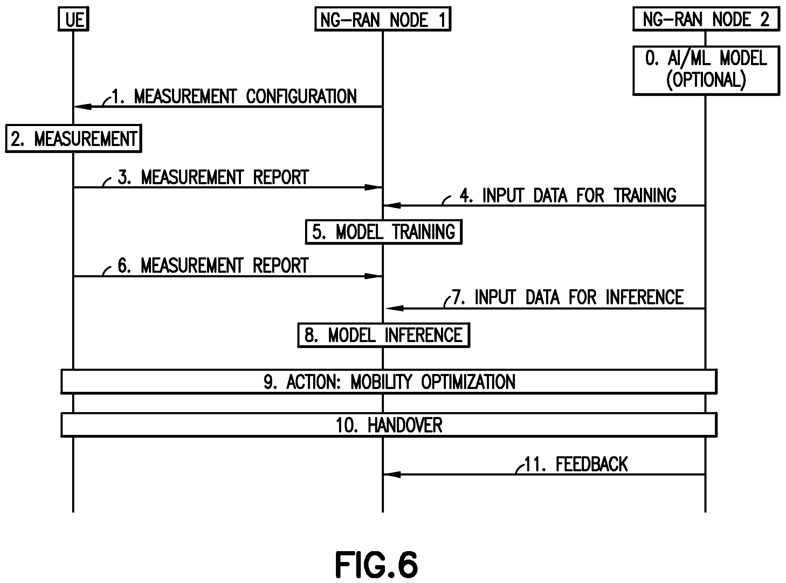

Different use cases have been considered so far, e.g., load balancing, energy saving, mobility optimization. FIG. 6 illustrates the mobility optimization use case, as an example.

Information that may be needed to derive training data, inference data or to monitor the performance of the AI/ML Model and its impact to the network through updating of KPIs and performance counters. NOTE: The functional framework discussed above is only in the context of the network scope i.e., RAN3 interfaces. Although some aspects of this functional framework serve as a reference for the currently ongoing RAN1 study item (i.e., AI/ML in the air interface), the framework for the gNB and UE collaboration requires fresh discussions.

Different use cases have been considered so far, e.g., load balancing, energy saving, mobility optimization. FIG. 6 illustrates the mobility optimization use case, as an example.

Prediction has been widely discussed as a method to improve performance. For example, prediction of UE trajectory or future location can be useful to adjust HO thresholds e.g., cell individual offset or to select the RNA in RRC-INACTIVE. Prediction of UE location could further help network resource allocation for various use cases including energy saving, load balancing and mobility management. As another example, HO decisions can be improved by using prediction information on the UE performance at the target cell. Energy saving decisions taken locally at a cell could be improved by utilizing prediction information on incoming UE traffic, as well as prediction information about traffic that may be offloaded from a candidate energy saving cell to a neighbor cell ensuring coverage.

User mobility optimization is one of the key success toward better radio communication systems, such as 5G and 6G. Mobility optimization could be achieved by optimizing HO to correct target cells/beams and at the correct time, avoiding falling RLF, or through avoiding unnecessary HO which may result in too many Ping-pongs between the serving cell and the target cell and vice-versa. Several mobility optimization techniques include AI/ML based show a high success rate in optimizing HOs (target and timing) and reducing RLF, however, all techniques achieve their targets on the cost of too many Ping-pongs as in ML based L3 Handover predictions or L1/L2 (LLM) based mobility techniques. Ping-pongs are costly in terms of outage such as at L3 level mobility. Even L1/L2 based ping pongs has little outage cost per ping-pong, but still too many occurrences will accumulate to a significant amount of system outage and wasting system resources which must be avoided.

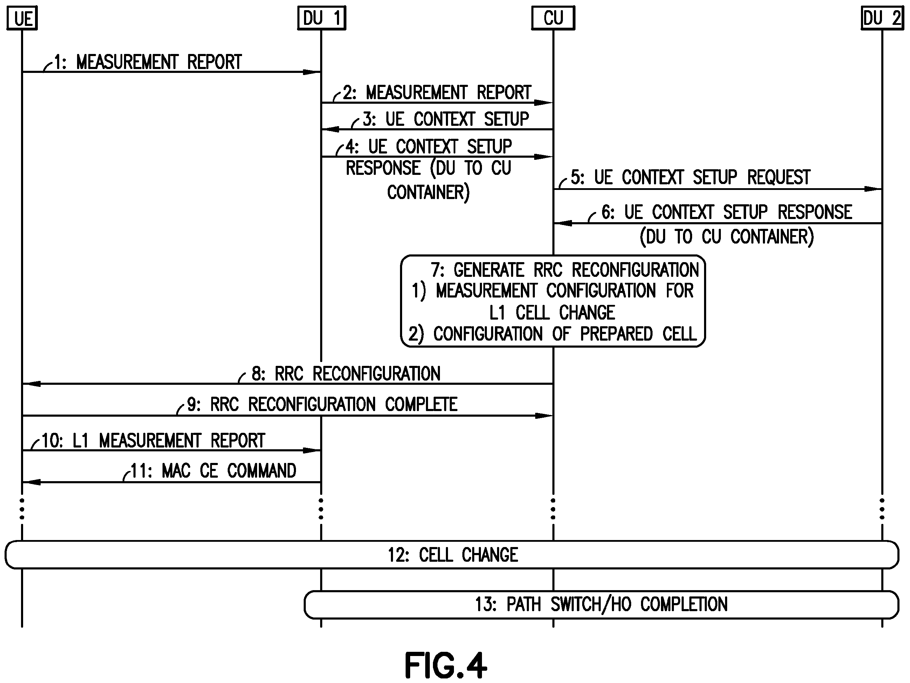

FIG. 4 shows a handover in L1/L2 based mobility.

Not all Ping-pongs are unnecessary and some are a must do to avoid RLF due to coverage hole for example. This makes avoiding unnecessary Ping-pongs even harder problem to solve.

In example embodiments of the invention there is proposed at least an ML based technique that allows to dynamically (optional: periodically) predict and tune an extra penalty (Ping-Pong Offset (PPOffset)) over the old serving cell/beam after a handover in order to avoid ping-pong between the current serving cell/beam and the old one.

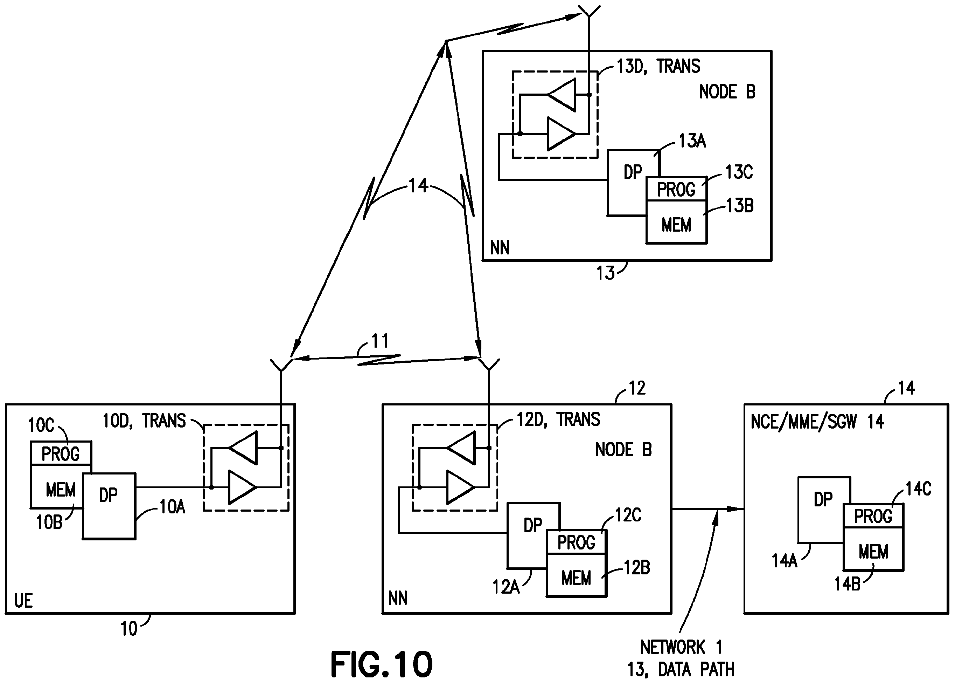

Before describing the example embodiments of the invention in detail, reference is made to FIG. 10 for illustrating a simplified block diagram of various electronic devices that are suitable for use in practicing the example embodiments of this invention.

FIG. 10 shows a block diagram of one possible and non-limiting exemplary system in which the example embodiments of the invention may be practiced. In FIG. 10, a user equipment (UE) 10 is in wireless communication with a wireless network 1 shown as Network 1 in FIG. 10. Network 1 is a radio technology network which includes or is associated with all the devices in FIG. 10. A UE is a wireless, typically mobile device that can access a wireless network. The UE 10 as shown in FIG. 10 includes one or more processors DP 10A, one or more memories MEM 10B, and one or more transceivers TRANS 10D interconnected through one or more buses 10E. Each of the one or more transceivers TRANS 10D includes a receiver and a transmitter. The one or more buses 10E may be address, data, or control buses, and may include any interconnection mechanism, such as a series of lines on a motherboard or integrated circuit, fiber optics or other optical communication equipment, and the like. The one or more transceivers TRANS 10D are connected to one or more antennas for communication over wireless link 11 and/or 14 to NN 12 and NN 13, respectively. The one or more memories MEM 10B include computer program code PROG 10C. The UE 10 communicates with NN 12 and/or NN 13 via a wireless link 11 and/or 14.

The NN 12 (NR/5G Node B or possibly an evolved NB or any other similar type of NW node) is a base station such as a master or secondary node base station (e.g., for NR or LTE long term evolution) that communicates with devices such as NN 13 and UE 10 of FIG. 10. The NN 12 provides access to wireless devices such as the UE 10 to the wireless network 1. The NN 12 includes one or more processors DP 12A, one or more memories MEM 12B, and one or more transceivers TRANS 12D interconnected through one or more buses 12E. In accordance with the example embodiments these TRANS 12D can include X2 and/or Xn interfaces for use to perform the example embodiments of the invention. Each of the one or more transceivers TRANS 12D includes a receiver and a transmitter. The one or more transceivers TRANS 12D are connected to one or more antennas for communication over at least link 11 with the UE 10. The one or more memories MEM 12B and the computer program code PROG 12C are configured to cause, with the one or more processors DP 12A, the NN 12 to perform one or more of the operations as described herein. The NN 12 may communicate with another gNB or eNB, or a device such as the NN 13. Further, the wireless link 11 and or any other link may be wired or wireless or both and may implement, e.g., an X2 or Xn interface. Further the wireless link 11 may be through other network devices such as, but not limited to an NCE/MME/SGW device such as the NCE/MME/SGW 14 of FIG. 10. Data path 13 provides connectivity between the NN 12 and the NCE/MME/SGW 14.

The NN 13 can comprise a mobility function device such as an AMF or SMF, further the NN 13 may comprise a NR/5G Node B or possibly an evolved NB a base station such as a master or secondary node base station (e.g., for NR or LTE long term evolution) that communicates with devices such as the NN 12 and/or UE 10 and/or the wireless network 1. The NN 13 includes one or more processors DP 13A, one or more memories MEM 13B, one or more network interfaces, and one or more transceivers TRANS 13D interconnected through one or more buses 13E. In accordance with the example embodiments these network interfaces of NN 13 can include X2 and/or Xn interfaces for use to perform the example embodiments of the invention. Each of the one or more transceivers TRANS 13D includes a receiver and a transmitter connected to one or more antennas. The one or more memories MEM 13B include computer program code PROG 13C. For instance, the one or more memories MEM 13B and the computer program code PROG 13C are configured to cause, with the one or more processors DP 13A, the NN 13 to perform one or more of the operations as described herein. The NN 13 may communicate with another mobility function device and/or eNB such as the NN 12 and the UE 10 or any other device using, e.g., wireless link 11, wireless link 14, or another link. These links maybe wired or wireless or both and may implement, e.g., an X2 or Xn interface. Further, as stated above the wireless link 11 or wireless link 14 may be through other network devices such as, but not limited to an NCE/MME/SGW device such as the NCE/MME/SGW 14 of FIG. 10. The NCE/MME/SGW 14 including MME (Mobility Management Entity)/SGW (Serving Gateway) functionality, such as User Plane Functionalities, and/or an Access Management functionality for LTE and similar functionality for 5G or any other radio technology.

The one or more buses 10E, 12E, and/or 13E of the devices of FIG. 10 may be address, data, or control buses, and may include any interconnection mechanism, such as a series of lines on a motherboard or integrated circuit, fiber optics or other optical communication equipment, wireless channels, and the like. For example, the one or more transceivers TRANS 12D, TRANS 13D and/or TRANS 10D may be implemented as a remote radio head (RRH) or transmission reception point (TRP), with the other elements of the NN 12 being physically in a different location from the RRH/TRP, and the one or more buses 12E could be implemented in part as fiber optic cable to connect the other elements of the NN 12 to a RRH/TRP.

It is noted that although FIG. 10 shows a network node or base station such as the NN 12 as in FIG. 10 and mobility management device such as the NN 13 as in FIG. 10, these devices can incorporate or be incorporated into an eNodeB or eNB or gNB such as for LTE and NR, and would still be configurable to perform example embodiments of the invention as described in this application.

Also it is noted that description herein indicates that "cells" perform functions, but it should be clear that the gNB that forms the cell and/or a user equipment and/or mobility management function device that will perform the functions. In addition, the cell makes up part of a gNB, and there can be multiple cells per gNB.

The wireless network 1 may include a network control element (NCE/MME/SGW) 14 that may include NCE (Network Control Element), MME (Mobility Management Entity)/SGW (Serving Gateway) functionality, and which provides connectivity with a further network, such as a telephone network and/or a data communications network (e.g., the Internet). The NN 12 and the NN 13 are coupled via a link 13 and/or link 14 to the NCE/MME/SGW 14. In addition, it is noted that the operations in accordance with example embodiments of the invention, as performed by the NN 13, may also be performed at the NCE/MME/SGW 14.

The NCE/MME/SGW 14 includes one or more processors DP 14A, one or more memories MEM 14B, and one or more network interfaces (N/W I/F(s)), interconnected through one or more buses coupled with the link 13 and/or 14. In accordance with the example embodiments these network interfaces can include X2 and/or Xn interfaces for use to perform the example embodiments of the invention. The one or more memories MEM 14B include computer program code PROG 14C. The one or more memories MEM14B and the computer program code PROG 14C are configured to, with the one or more processors DP 14A, cause the NCE/MME/SGW 14 to perform one or more operations which may be needed to support the operations in accordance with the example embodiments of the invention.

The wireless Network 1 may implement network virtualization, which is the process of combining hardware and software network resources and network functionality into a single, software-based administrative entity, a virtual network. Network virtualization involves platform virtualization, often combined with resource virtualization. Network virtualization is categorized as either external, combining many networks, or parts of networks, into a virtual unit, or internal, providing network-like functionality to software containers on a single system. Note that the virtualized entities that result from the network virtualization are still implemented, at some level, using hardware such as processors DP10A, DP12A, DP13A, and/or DP14A and memories MEM 10B, MEM 12B, MEM 13B, and/or MEM 14B, and also such virtualized entities create technical effects.

The computer readable memories MEM 10B, MEM 12B, MEM 13B, and MEM 14B may be of any type suitable to the local technical environment and may be implemented using any suitable data storage technology, such as semiconductor based memory devices, flash memory, magnetic memory devices and systems, optical memory devices and systems, fixed memory and removable memory. The computer readable memories MEM 10B, MEM 12B, MEM 13B, and MEM 14B may be means for performing storage functions. The processors DP10A, DP12A, DP13A, and DP14A may be of any type suitable to the local technical environment, and may include one or more of general purpose computers, special purpose computers, microprocessors, digital signal processors (DSPs) and processors based on a multi-core processor architecture, as non-limiting examples. The processors DP10A, DP12A, DP13A, and DP14A may be means for performing functions, such as controlling the UE 10, NN 12, NN 13, NCE/MME/SGW 14 and other functions as described herein.

As similarly stated above, in example embodiments of the invention there is proposed at least an ML based technique that allows to dynamically (optional: periodically) predict and tune an extra penalty (Ping-Pong Offset (PPOffset)) over the old serving cell/beam after a handover in order to avoid ping-pong between the current serving cell/beam and the old one. The ML based technique takes into account the UE trajectory, speed and the received signal levels (e.g.,; RSRP) from the old serving cell/beam as input and produces a PPOffset as an output. This PPOffset will be used only for assessing the HO back toward the old serving cell in the following way as examples but not limited to:
□ Conventional HO use case: HO Measurement reporting for triggering a HO back toward
   the old serving cell must be enabled only when the old serving cell becomes PPOffset better than the current serving cell and for a TTT timer;
□ LLM HO use case: HO execution toward the old serving cell/beam must be triggered only when the old serving cell/beam becomes PPOffset better than the current serving cell/beam.

The PPOffset prediction will be enabled at the UE side upon indication from the network side.

In another embodiment, the network may indicate a prediction periodicity to be followed by the UE.

The UE will perform the prediction and send a feedback to the network for verification.

In example embodiments of the invention there is proposed ML based signalling and technique to minimize the unnecessary HO triggering between the new serving cell/beam and the old one (Ping-pongs).

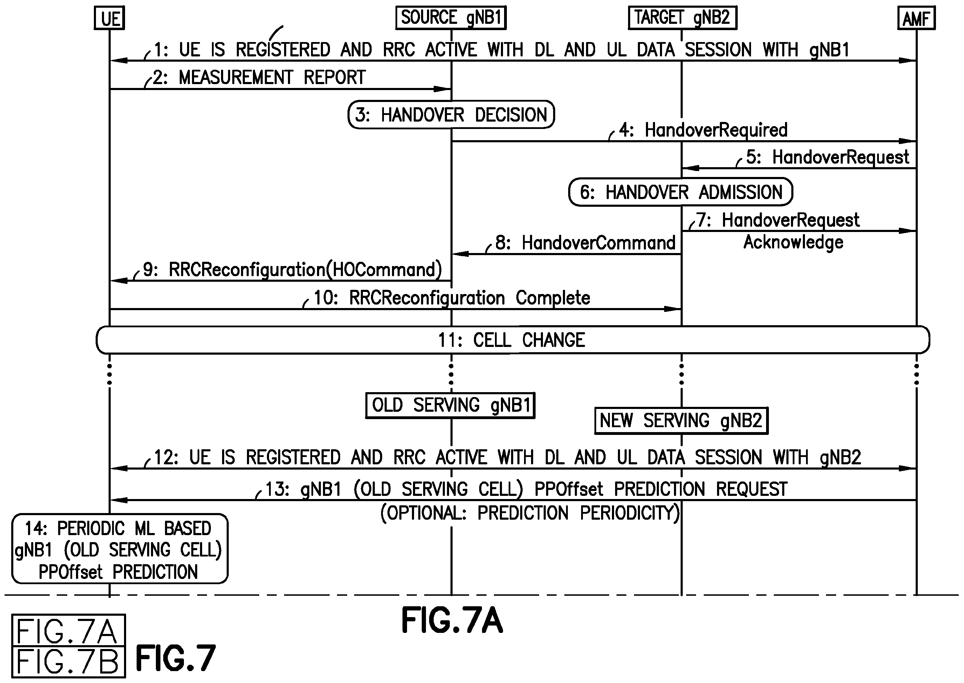

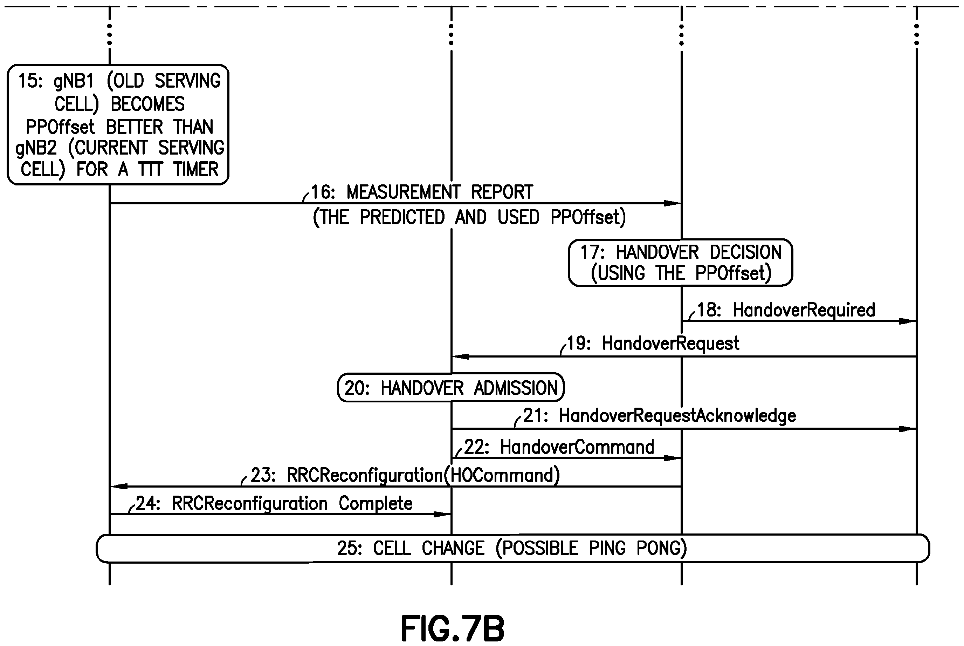

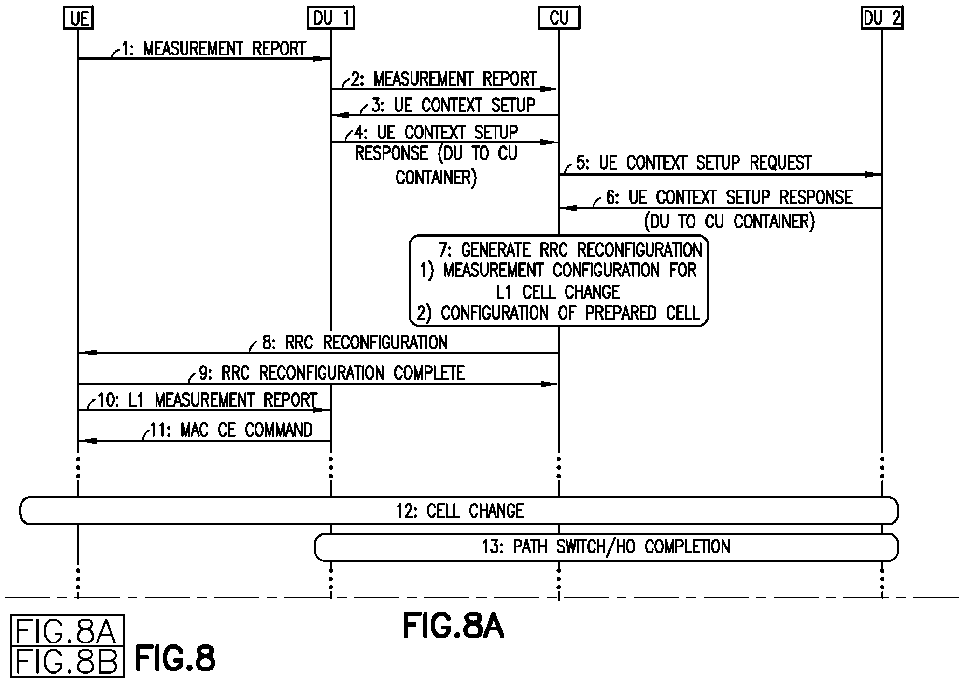

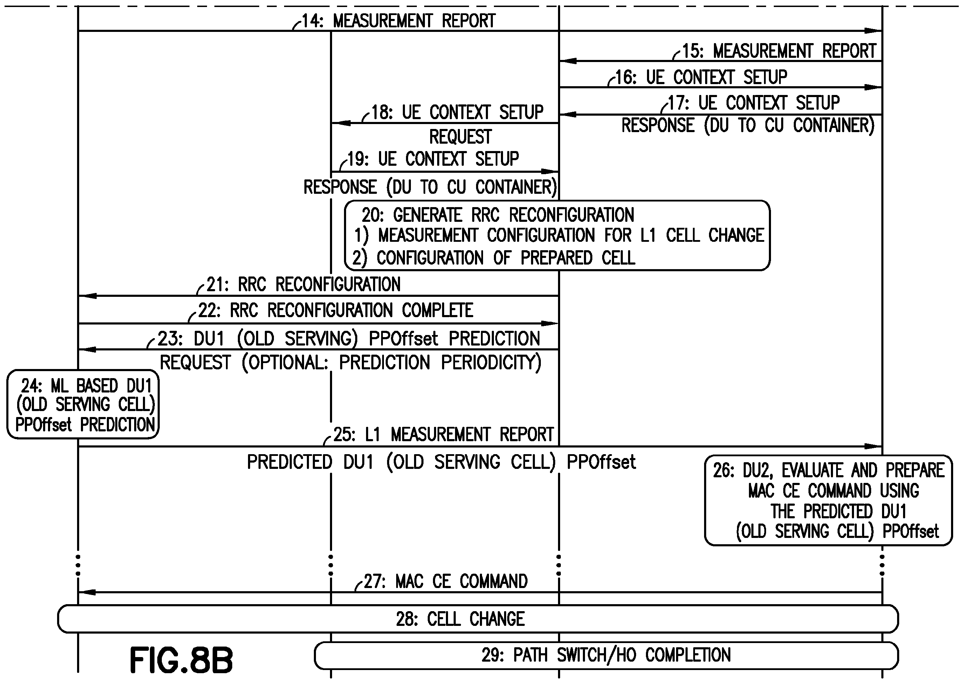

FIG. 7 and FIG. 8, are the use cases examples for the conventional A3 event based HO (steps 1-11 in FIG. 7) and the L1/L2 Mobility (LLM) HO (steps 1-13 in FIG. 8), respectively.

Both figures show the case when a HO is triggered from gNB 1 to gNB2 in FIG. 7 and from DU1 to DU2 in FIG. 8, and a possible HO back to old serving cell (gNB1, DU1) could happen.

At least some inventive step in accordance with example embodiments of the invention are shown in FIG. 7 and FIG. 8.

A3 event based HO use case FIG. 7:
In order to avoid the unnecessary HO back to old serving cell, in example embodiments of the invention there is proposed the following:
1. Embodiment-1: Indication from the network to UE side requesting the use of the ML based PPOffset prediction as special penalty to be used when evaluating the HO back to the old serving cell only:
   □ Step 13 in FIG. 7: PPOffset prediction request message is sent from the network to the UE to enable the PPOffset prediction. In another implementation the UE may send an PPOffset prediction requestion, followed by PPOffset acknowledgement message response from the network;
   □ Optional: network may indicate also a prediction periodicity information to be used by the UE;
2. Embodiment-2: Step14 in FIG. 7: UE upon reception of PPOffset prediction from the network, it uses its local information such as but not limited to, UE's speed, UE's trajectory, UE's received signal levels from old cell/beam as input to it ML pre-trained model to perform prediction for the optimal PPOffset that will be used as part of the HO measurement reporting for triggering HO in A3 event based.
3. Embodiment-3: The UE may repeat the PPOffset prediction periodically (upon indication from network) taking into account the change in it speed, trajectory and received signal levels from the old serving cell.
4. Step 15 in FIG. 7: UE/network uses the predicted PPOffset as part of it HO decision to decide to execute the HO back toward the old serving cell or not.
5. Embodiment-4: Step16 in FIG. 7: UE sends the predicted and used PPOffset as part of the measurement reporting to the network. Network will use same PPOffset for evaluating the HO decision locally.
   L1/L2 Mobility (LLM) HO use case FIG. 8: In order to avoid the unnecessary HO back to old serving cell, we propose the following:
6. Embodiment-5: Indication from the network to UE side requesting the use of the ML based PPOffset prediction as special penalty to be used when evaluating the HO back to the old serving cell only.
   Step 23 in FIG. 8: PPOffset prediction request message is sent from the network to the UE to enable the PPOffset prediction;
   Optional: network may indicate also a prediction periodicity information to be used by the UE.
7. Embodiment-6: Step 24 in FIG. 8: UE upon reception of PPOffset prediction from the network, it uses its local information such as but not limited to, UE's speed, UE's trajectory, UE's received signal levels from old cell/beam as input to it ML pre-trained model to perform prediction for the optimal PPOffset that will be used as part of HO execution condition for L1/L2 mobility (same also could be used for HO execution in Conditional HO use case).
8. Embodiment-7: The UE may repeat the PPOffset prediction periodically (upon indication from network) taking into account the change in it speed, trajectory and received signal levels from the old serving cell.
9. Embodiment-8: Step 25 in FIG. 8: UE sends the predicted PPOffset as part of the L1 measurement reporting to the network. Network will use same PPOffset for evaluating the HO and preparing the MAC CE command Ho execution condition.

### ML Model at the User Side (An example but not limited to)

For our use cases we can use a supervised machine learning model to do a regression task, by which the ML model will use the radio cells measurements from the older and new serving cells, the UE's trajectory and speed information as input to the ML regression model and the model shall output a float number representing the optimal offset (PPOffset) used to avoid unnecessary HO back toward the old serving cell.

For ground truth labeling, we can take the following rules into account:
1. PPOffset level shall go lower with the period of time the UE is spending in the new serving cell. PPOffset will be set to zero if period of time > predefined time limit (e.g., 500 milliseconds in A3 event based HO triggering use case) and vice versa.
2. PPOffset level shall go higher with UE trajectory/speed going away from old serving cell and vice-versa.
   □ The supervised regression ML model input;

The proposed multi-label classification model could be designed (but not limited to) using neural network of:
1. an input layer followed with;
2. several hidden fully connected dense layers and finally;
3. an output layer which has:
   a. an output dimension equal to one,
   b. a Sigmoid as the activation function, and
   c. Mean Absolute Error as a loss function.

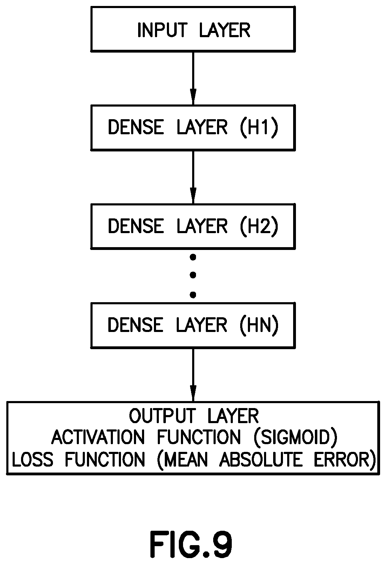

FIG. 9 shows a machine learning model structure. As shown in FIG. 9 there is an input layer, a dense layer (H1), a dense layer (H1), a dense layer (HN), and an output layer with an activation function (sigmoid) and a loss function (Means Absolute error).

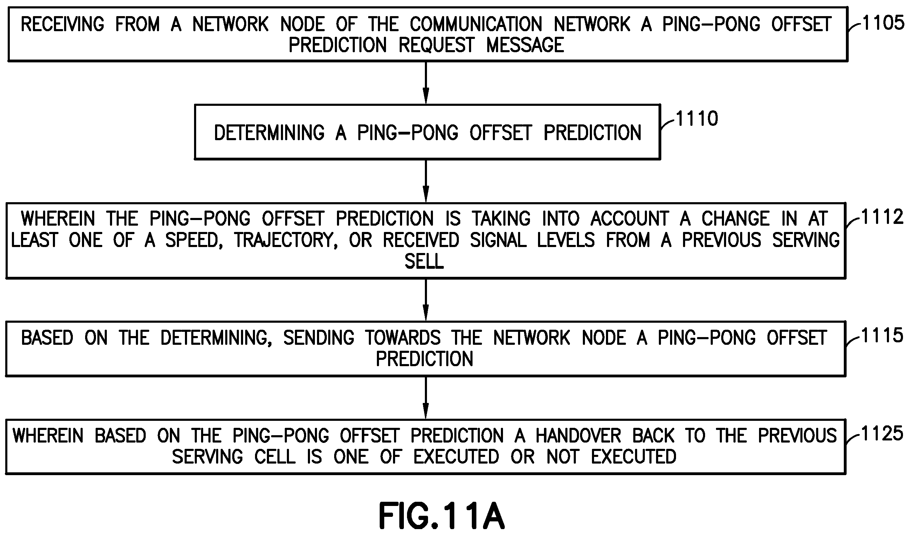

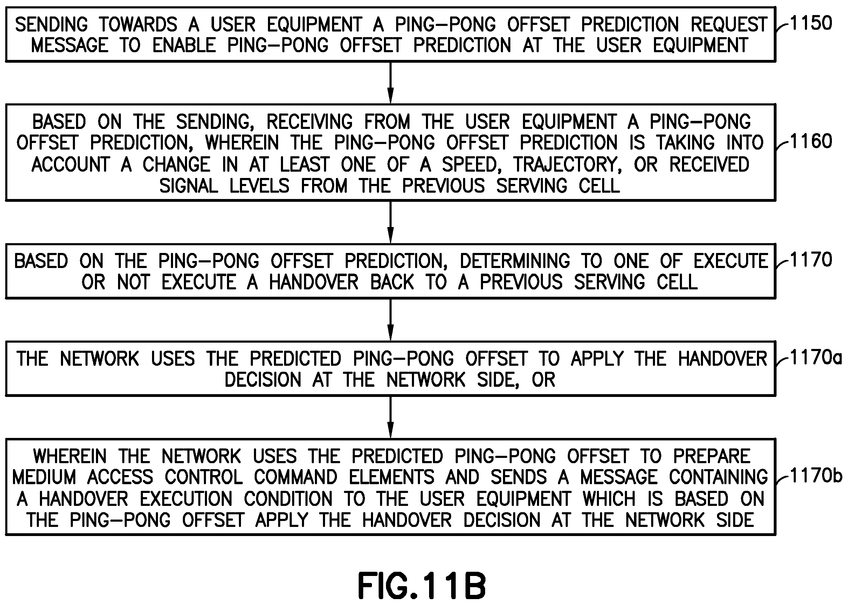

FIG. 11A and FIG. 11B each show a method in accordance with example embodiments of the invention which may be performed by an apparatus. These FIG. 11A and FIG. 11B can be based on FIG. 7 and FIG. 8.

FIG11A (based on FIG. 7): In this use case example (A3 event based handover): the network uses the predicted Ping-pong Offset to apply the handover decision at the network side. While in use case example in FIG11B (based on FIG. 8) , the (L1/L2 mobility or also CHO): The network uses the predicted Ping-pong Offset to prepare a MAC CE (medium access control command elements) message containing a handover execution condition that uses the ping-pong offset as part of it, then the network send this handover condition command as part of the MAC CE message to the user terminal which will use this condition to test and execute handover from its side once the condition is satisfied.

FIG. 11A illustrates operations which may be performed by a device such as, but not limited to, a device such as a UE 10 as in FIG. 10. As shown in step 1105 of FIG. 11A there is As shown in step 1105 of FIG. 11A there is receiving from a network node of the communication network a ping-pong offset prediction request message. As shown in step 1110 of FIG. 11A there is determining a ping-pong offset prediction. As shown in step 1112 of FIG. 11A wherein the ping-pong offset prediction is taking into account a change in at least one of a speed, trajectory, or received signal levels from a previous serving cell. As shown in step 1115 of FIG. 11A there is, based on the determining, sending towards the network node the ping-pong offset prediction. Then as shown in step 1125 of FIG. 11A wherein based on the ping-pong offset prediction the handover back to the previous serving cell is one of executed or not executed.

In accordance with the example embodiments as described in the paragraph above, wherein the ping-pong offset prediction is taking into account at least the received signal levels from the previous serving cell as input to a machine learning pre-trained model to perform prediction for an optimal ping-pong offset.

In accordance with the example embodiments as described in the paragraphs above, wherein the ping-pong offset prediction determination is repeated periodically.

In accordance with the example embodiments as described in the paragraphs above, wherein the ping-pong offset prediction determination at the user equipment is repeated periodically upon notification from the communication network.

In accordance with the example embodiments as described in the paragraphs above, wherein the optimal ping-pong offset is to be used as part of handover measurement reporting for triggering at least one of an A3 event based or layer1/layer2 mobility handover or a conditional handover.

In accordance with the example embodiments as described in the paragraphs above, wherein the ping-pong offset prediction is sent to the network node as part of layer 1 measurement reporting to the communication network.

In accordance with the example embodiments as described in the paragraphs above, wherein the ping-pong offset prediction is identifying a value for one of preventing or delaying the apparatus from executing a handover to the previous serving cell.

In accordance with the example embodiments as described in the paragraphs above, wherein the ping-pong offset prediction as part of a handover decision to trigger executing or not executing the handover back toward the previous serving cell.

In accordance with the example embodiments as described in the paragraphs above, wherein the handover decision is triggered upon evaluating whether a previous serving cell power exceeds a current serving cell power plus a ping-pong offset value or not.

In accordance with the example embodiments as described in the paragraphs above, wherein the receiving is based on determining that a handover of the apparatus from a serving cell back to the previous serving cell is to be executed.

A non-transitory computer-readable medium (MEM 10B as in FIG. 10) storing program code (PROG 10C as in FIG. 10), the program code executed by at least one processor (DP 10A as in FIG. 10) to perform the operations as at least described in the paragraphs above.

In accordance with an example embodiment of the invention as described above there is an apparatus comprising: means for receiving (TRANS 10D, MEM 10B, PROG 10C, and DP 10A as in FIG. 10) from a network node of the communication network a ping-pong offset prediction request message; means for determining (TRANS 10D, MEM 10B, PROG 10C, and DP 10A as in FIG. 10) a ping-pong offset prediction; means, based on the determining, for sending (TRANS 10D, MEM 10B, PROG 10C, and DP 10A as in FIG. 10) towards the network node the ping-pong offset prediction; wherein the ping-pong offset prediction is taking into account (TRANS 10D, MEM 10B, PROG 10C, and DP 10A as in FIG. 10) a change in at least one of a speed, trajectory, or received signal levels from the previous serving cell; and wherein based on the ping-pong offset prediction the handover back to the previous serving cell is one of executed or not executed (TRANS 10D, MEM 10B, PROG 10C, and DP 10A as in FIG. 10).

In the example aspect of the invention according to the paragraph above, wherein at least the means for receiving, sending, taking into account, and executing or not executing comprises a non-transitory computer readable medium [MEM 10B as in FIG. 10] encoded with a computer program [PROG 10C as in FIG. 10] executable by at least one processor [DP 10A as in FIG. 10].

FIG. 11B illustrates operations which may be performed by a device such as, but not limited to, a device such as an NN 12 and/or NN 13 as in FIG. 10. As shown in step 1150 of FIG. 11B there is sending towards a user equipment a ping-pong offset prediction request message to enable ping-pong offset prediction at the user equipment. As shown in step 1160 of FIG. 11B there is, based on the sending, receiving from the user equipment a ping-pong offset prediction, wherein the ping-pong offset prediction is taking into account a change in at least one of a speed, trajectory, or received signal levels from the previous serving cell. Then as shown in step 1170 of FIG. 11B there is, based on the received ping-pong offset prediction, determining to one of execute or not execute the handover back to the previous serving cell. Then there are optional steps 1170a and 1170b, wherein as shown in step 1170a of FIG. 11B the network uses the predicted Ping-pong Offset to apply the handover decision at the network side, or as shown in step 1170b of FIG. 11B wherein the network uses the predicted Ping-pong Offset to prepare medium access control command elements and sends a message containing a handover execution condition to the user equipment which is based on the ping-pong offset apply the handover decision at the network side.

In accordance with the example embodiments as described in the paragraph above, wherein the ping-pong offset prediction request message is to enable a machine learning based ping-pong offset prediction at the user equipment.

In accordance with the example embodiments as described in the paragraphs above, wherein the ping-pong offset prediction is received by the network node as part of layer 1 measurement reporting.

In accordance with the example embodiments as described in the paragraphs above, wherein there is using the ping-pong offset prediction to evaluate the handover; and prepare a medium access control element command for executing the handover.

In accordance with the example embodiments as described in the paragraphs above, wherein the apparatus uses the ping-pong offset prediction as part of a handover decision to trigger executing or not executing the handover back toward the previous serving cell.

In accordance with the example embodiments as described in the paragraphs above, wherein the ping-pong offset value is utilized as part of a handover decision rule to evaluate whether a previous serving cell power exceeds a current serving cell power plus a ping-pong offset value or not.

In accordance with the example embodiments as described in the paragraphs above, wherein the user equipment uses the ping-pong offset prediction as part of a handover decision to trigger executing or not executing the handover back toward the serving cell.

In accordance with the example embodiments as described in the paragraphs above, the network either uses the offset directly as part of the HO decision or use it as part of the L1/L2 or CHO condition that will be sent to the UE to decide the HO execution to its side.

In accordance with the example embodiments as described in the paragraphs above, wherein the sending is based on determining a handover of the user equipment from a serving cell back to the previous serving cell is to be executed.

A non-transitory computer-readable medium (MEM 12B and/or MEM 13B as in FIG. 10) storing program code (PROG 12C and/or PROG. 13C as in FIG. 10), the program code executed by at least one processor (DP 12A and/or DP 13A as in FIG. 10) to perform the operations as at least described in the paragraphs above.

In accordance with an example embodiment of the invention as described above there is an apparatus comprising: means for sending (TRANS 12D and/or TRANS 13D, MEM 12B and/or MEM 13B, PROG 12C and/or PROG. 13C, and DP 12A and/or DP 13A as in FIG. 10) towards a user equipment (UE 10 as in FIG. 10) a ping-pong offset prediction request message to enable ping-pong offset prediction at the user equipment; means, based on the sending, for receiving (TRANS 12D and/or TRANS 13D, MEM 12B and/or MEM 13B, PROG 12C and/or PROG. 13C, and DP 12A and/or DP 13A as in FIG. 10) from the user equipment a ping-pong offset prediction, wherein the ping-pong offset prediction is taking into account a change in at least one of a speed, trajectory, or received signal levels from the previous serving cell; and means, based on the ping-pong offset prediction, for determining (TRANS 12D and/or TRANS 13D, MEM 12B and/or MEM 13B, PROG 12C and/or PROG. 13C, and DP 12A and/or DP 13A as in FIG. 10) to one of execute or not execute the handover back to the previous serving cell.

In the example aspect of the invention according to the paragraph above, wherein at least the means for determining, receiving, sending, and executing or not executing comprises a non-transitory computer readable medium [MEM 12B and/or MEM 13B as in FIG. 10] encoded with a computer program [PROG 12C and/or PROG. 13C as in FIG. 10] executable by at least one processor [DP 12A and/or DP 13A as in FIG. 10].

Further in accordance with example embodiments of the invention there is performing operations which may be performed by a device such as, but not limited to, a device such as an NN 12 and/or NN 13 as in FIG. 10. These operation include receiving from a network node of the communication network a ping-pong offset prediction request message; determining a ping-pong offset prediction, wherein the ping-pong offset prediction is taking into account a change in at least one of a speed, trajectory, or received signal levels from a previous serving cell; and based on the determining, sending towards the network node the ping-pong offset prediction, wherein based on the ping-pong offset prediction a handover back to the previous serving cell is one of executed or not executed.

In accordance with the example embodiments as described in the paragraphs above, wherein the ping-pong offset prediction is taking into account at least the received signal levels from the previous serving cell as input to a machine learning pre-trained model to perform prediction for an optimal ping-pong offset.

In accordance with the example embodiments as described in the paragraphs above, wherein the ping-pong offset prediction is sent to the network node as part of layer 1 measurement reporting

A non-transitory computer-readable medium (MEM 12B and/or MEM 13B as in FIG. 10) storing program code (PROG 12C and/or PROG. 13C as in FIG. 10), the program code executed by at least one processor (DP 12A and/or DP 13A as in FIG. 10) to perform the operations as at least described in the paragraphs above.

In accordance with an example embodiment of the invention as described above there is an apparatus comprising: means for receiving () from a network node (NN 12 and/or NN 13 as in FIG. 10) of the communication network (Network 1 as in FIG. 10) a ping-pong offset prediction request message; means for determining (TRANS 12D and/or TRANS 13D, MEM 12B and/or MEM 13B, PROG 12C and/or PROG. 13C, and DP 12A and/or DP 13A as in FIG. 10) a ping-pong offset prediction, wherein the ping-pong offset prediction is taking into account a change in at least one of a speed, trajectory, or received signal levels from a previous serving cell; means, based on the determining, for sending (TRANS 12D and/or TRANS 13D, MEM 12B and/or MEM 13B, PROG 12C and/or PROG. 13C, and DP 12A and/or DP 13A as in FIG. 10) towards the network node the ping-pong offset prediction, wherein based on the ping-pong offset prediction a handover back to the previous serving cell is one of executed or not executed.

Further, in accordance with example embodiments of the invention there is circuitry for performing operations in accordance with example embodiments of the invention as disclosed herein. This circuitry can include any type of circuitry including content coding circuitry, content decoding circuitry, processing circuitry, image generation circuitry, data analysis circuitry, etc.). Further, this circuitry can include discrete circuitry, application-specific integrated circuitry (ASIC), and/or field-programmable gate array circuitry (FPGA), etc. as well as a processor specifically configured by software to perform the respective function, or dual-core processors with software and corresponding digital signal processors, etc.). Additionally, there are provided necessary inputs to and outputs from the circuitry, the function performed by the circuitry and the interconnection (perhaps via the inputs and outputs) of the circuitry with other components that may include other circuitry in order to perform example embodiments of the invention as described herein.

In accordance with example embodiments of the invention as disclosed in this application this application, the "circuitry" provided can include at least one or more or all of the following:
(a) hardware-only circuit implementations (such as implementations in only analog and/or digital circuitry);
(b) combinations of hardware circuits and software, such as (as applicable):
   (i) a combination of analog and/or digital hardware circuit(s) with software/firmware; and
   (ii) any portions of hardware processor(s) with software (including digital signal processor(s)), software, and memory(ies) that work together to cause an apparatus, such as a mobile phone or server, to perform various functions, such as functions or operations in accordance with example embodiments of the invention as disclosed herein); and
(c) hardware circuit(s) and or processor(s), such as a microprocessor(s) or a portion of a microprocessor(s), that requires software (e.g., firmware) for operation, but the software may not be present when it is not needed for operation."

In general, the various embodiments may be implemented in hardware or special purpose circuits, software, logic or any combination thereof. For example, some aspects may be implemented in hardware, while other aspects may be implemented in firmware or software which may be executed by a controller, microprocessor or other computing device, although the invention is not limited thereto. While various aspects of the invention may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

Embodiments of the inventions may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

The word "exemplary" is used herein to mean "serving as an example, instance, or illustration." Any embodiment described herein as "exemplary" is not necessarily to be construed as preferred or advantageous over other embodiments. All of the embodiments described in this Detailed Description are exemplary embodiments provided to enable persons skilled in the art to make or use the invention and not to limit the scope of the invention which is defined by the claims.

The foregoing description has provided by way of exemplary and non-limiting examples a full and informative description of the best method and apparatus presently contemplated by the inventors for carrying out the invention. However, various modifications and adaptations may become apparent to those skilled in the relevant arts in view of the foregoing description, when read in conjunction with the accompanying drawings and the appended claims. However, all such and similar modifications of the teachings of this invention will still fall within the scope of this invention.

It should be noted that the terms "connected," "coupled," or any variant thereof, mean any connection or coupling, either direct or indirect, between two or more elements, and may encompass the presence of one or more intermediate elements between two elements that are "connected" or "coupled" together. The coupling or connection between the elements can be physical, logical, or a combination thereof. As employed herein two elements may be considered to be "connected" or "coupled" together by the use of one or more wires, cables and/or printed electrical connections, as well as by the use of electromagnetic energy, such as electromagnetic energy having wavelengths in the radio frequency region, the microwave region and the optical (both visible and invisible) region, as several non-limiting and non-exhaustive examples.

Furthermore, some of the features of the preferred embodiments of this invention could be used to advantage without the corresponding use of other features. As such, the foregoing description should be considered as merely illustrative of the principles of the invention, and not in limitation thereof.

## Claims

1. An apparatus comprising:
means for receiving from a network node of the communication network a ping-pong offset prediction request message;
means for determining a ping-pong offset prediction, wherein the ping-pong offset prediction is taking into account a change in at least one of a speed, trajectory, or received signal levels from a previous serving cell; and
means for sending towards the network node the ping-pong offset prediction based on the determining,
wherein, based on the ping-pong offset prediction, a handover back to the previous serving cell is one of executed or not executed.

2. The apparatus of claim 1, wherein the ping-pong offset prediction is taking into account at least the received signal levels from the previous serving cell as input to a machine learning pre-trained model to perform prediction for an optimal ping-pong offset.

3. The apparatus of claim 2, wherein the ping-pong offset prediction determination is repeated periodically.

4. The apparatus of claim 2, wherein the optimal ping-pong offset is to be used as part of handover measurement reporting for triggering at least one of an A3 event based or layer1/layer2 mobility handover or a conditional handover.

5. The apparatus of any of claims 1-4, wherein the ping-pong offset prediction is sent to the network node as part of layer 1 measurement reporting.

6. The apparatus of any of claims 1-5, wherein the ping-pong offset prediction is identifying a value for one of preventing or delaying the apparatus from executing a handover to the previous serving cell.

7. The apparatus of any of claims 1-6, wherein the ping-pong offset prediction is used as part of a handover decision to trigger executing or not executing the handover back toward the previous serving cell.

8. The apparatus of claim 7, wherein the handover decision is triggered upon evaluating whether a previous serving cell power exceeds a current serving cell power plus a ping-pong offset value or not.

9. The apparatus of any of claims 1-8, wherein the receiving is based on determining that the handover of the apparatus from a serving cell back to the previous serving cell is to be executed.

10. An apparatus comprising:
means for sending, by a network node towards a user equipment, a ping-pong offset prediction request message to enable ping-pong offset prediction at the user equipment;
means for receiving, from the user equipment, a ping-pong offset prediction based on the sending, wherein the ping-pong offset prediction is taking into account a change in at least one of a speed, trajectory, or received signal levels from a previous serving cell; and
means for determining, based on the received ping-pong offset prediction, one of executing or not executing a handover back to the previous serving cell.

11. The apparatus of claim 10, wherein the ping-pong offset prediction request message is to enable a machine learning based ping-pong offset prediction at the user equipment.

12. The apparatus of claim 10 or 11, wherein the ping-pong offset prediction is received by the network node as part of layer 1 measurement reporting.

13. The apparatus of any of claims 10-12, further comprising:
means for using the ping-pong offset prediction to evaluate the handover; and
means for preparing a medium access control control element command for executing the handover.

14. The apparatus of any of claims 10-13, wherein the apparatus uses the ping-pong offset prediction as part of a handover decision to trigger executing or not executing the handover back toward the previous serving cell.

15. A method, comprising:
receiving from a network node of the communication network a ping-pong offset prediction request message
determining a ping-pong offset prediction, wherein the ping-pong offset prediction is taking into account a change in at least one of a speed, trajectory, or received signal levels from a previous serving cell; and
based on the determining, sending towards the network node the ping-pong offset prediction,
wherein based on the ping-pong offset prediction a handover back to the previous serving cell is one of executed or not executed.
